# EUROPÄISCHE PATENTSCHRIFT

(11) **EP 2 499 644 B1**
(45) Veröffentlichungstag und Bekanntmachung des Hinweises auf die Patenterteilung: **21.01.2015**
(21) Anmeldenummer: 10792854.1
(22) Anmeldetag: 09.11.2010
(51) Int. Cl.: G01B 5/25, G01B 7/16, G01B 7/24, G01B 7/28, G21C 17/06

(54) **Einrichtung zum Ermitteln der Verformung eines Brennelementes eines Druckwasserreaktors**
Device for determining the deformation of a fuel element of a pressurized water reactor
Dispositif pour la mesure de la déformation d'un élément de combustible d'un réacteur à eau pressurisée

(30) Priorität: 12.11.2009 DE 102009046665; 09.12.2009 DE 102009047760
(43) Veröffentlichungstag der Anmeldung: 19.09.2012
(73) Patentinhaber: AREVA GmbH, 91052 Erlangen (DE)
(72) Erfinder: HUMMEL, Wolfgang, 92318 Neumarkt (DE)
(74) Vertreter: Meissner, Bolte & Partner GbR
(86) Internationale Anmeldenummer: PCT/EP2010/067073
(87) Internationale Veröffentlichungsnummer: WO 2011/057995

(56) Entgegenhaltungen:
- EP-A2- 0 059 301
- FR-A1- 2 754 053
- JP-A- 10 282 286
- JP-A- H10 213 692
- US-A- 4 427 622
- US-A- 5 852 642
- US-B1- 6 549 600
- ERMOLAEV P N ET AL: "PIEZOELECTRIC PROBES FOR MEASURING THE CURVATURE OF NUCLEAR REACTORFUEL CHANNELS", MEASUREMENT TECHNIQUES, CONSULTANTS BUREAU. NEW YORK, US, Bd. 36, Nr. 7, 1. Juli 1993 (1993-07-01), Seite 819/820, XP000434257, ISSN: 0543-1972, DOI: DOI:10.1007/BF00981662

## Beschreibung

Die Erfindung bezieht sich auf eine Einrichtung zum Ermitteln der Verformung eines Brennelementes eines Druckwasserreaktors.

Die Brennelemente eines Druckwasserreaktors können im Laufe ihres Betriebes abhängig von ihrer Position im Kern eine im Wesentlichen aus einer Durchbiegung bestehende Verformung erfahren, die im ungünstigsten Fall zu einer Schwergängigkeit der Steuerstäbe oder zu Problemen beim Brennelementwechsel führen können. Bei der Inspektion von Brennelementen ist es daher erforderlich, die Verformung eines solchen Brennelementes quantitativ zu bestimmen, um über deren weitere Verwendbarkeit entscheiden zu können oder um diese, wie es beispielsweise in der WO 02/095765 A2 vorgeschlagen ist, am Rand des Kerns derart orientiert einzusetzen, dass das Maximum der Durchbiegung an der Außenseite des Kerns liegt, um auf diese Weise eine vorliegende Durchbiegung zu verringern.

Aus der JP H10 213692 A ist eine Einrichtung zum Messen der Verformung eines Brennelements eines Druckwasserreaktors bekannt, die eine Mehrzahl von Steuerstabführungsrohren umfasst. Im Inneren eines der Steuerstabführungsrohre ist eine Sonde einführbar, die sich über eine elastische Membran an der Innenwand des Steuerstabführungsrohres abstützt. Innerhalb der Sonde ist eine Messeinrichtung vorgesehen, die als Ultraschalldetektor ausgebildet ist, mittels der über eine Abstandsmessung eine Verformung der Brennelemente erfassbar ist. Ein derartiges Vorgehen ist jedoch relativ aufwändig.

Der Erfindung liegt daher die Aufgabe zu Grunde, eine Einrichtung zum Messen der Verformung eines Brennelementes eines Druckwasserreaktors anzugeben, mit dem die Verformung des Brennelementes bei zugleich hoher Messgenauigkeit einfach und mit geringem Zeitaufwand durchgeführt werden kann. Hinsichtlich der Einrichtung wird die genannte Aufgabe gemäß der Erfindung mit den Merkmalen des Patentanspruches 1 gelöst. Gemäß diesen Merkmalen ist bei der Einrichtung zum Messen der Verformung eines Brennelementes eines Druckwasserreaktors, das eine Mehrzahl von Steuerstabführungsrohren umfasst eine in das Innere eines Steuerstabführungsrohres einführbare und in Richtung der Längsachse des Steuerstabführungsrohres verfahrbare Sonde vorgesehen, die zumindest eine Referenzachse aufweist, und die sich in zumindest einem Abschnitt des Steuerstabführungsrohres an dessen Innenwand derart abstützt, dass die Orientierung der zumindest einen Referenzachse eindeutig von der Orientierung der Längsachse des Steuerstabführungsrohres in diesem Abschnitt abhängt. Zur Erfassung der Orientierung der zumindest einen Referenzachse in diesem Abschnitt des Steuerstabführungsrohres relativ zur Orientierung dieser oder einer weiteren Referenzachse der Sonde in einem anderen Abschnitt ist eine in der Sonde angeordnete Messeinrichtung vorgesehen.

Erfindungsgemäß ist als Messeinrichtung ein Neigungsmesser zum Bestimmen der Neigung der Mittelachse der Sonde gegen die Vertikale vorgesehen.

Ausgangspunkt der Erfindung ist die Überlegung, dass die Form eines Steuerstabführungsrohres in einem Brennelement eines Druckwassersreaktors aufgrund der Tatsache, dass es sich hierbei um ein tragendes Strukturteil des Brennelementes handelt, unmittelbar die Form des Brennelementes wiedergibt.

Mit der Einrichtung gemäß der Erfindung ist es möglich, die Verformung bzw. Durchbiegung eines Brennelementes mit hoher Genauigkeit schnell und einfach auch dann zu messen, wenn das Brennelement nicht exakt in der Vertikalen ausgerichtet ist, so dass es nicht notwendig ist, das Brennelement in aufwendig konstruierte Messstationen einzubringen. Darüber hinaus kann die Vermessung auch bei ungünstigen Beleuchtungsverhältnissen erfolgen, die eine üblicherweise in derartigen Messstationen durchgeführte fotogrammetrische Vermessung erschweren.

Referenzachse ist eine innerhalb der Sonde feststehende Achse, die bei in das Steuerstabführungsrohr eingeführter Sonde in einer eindeutigen Winkelbeziehung zu einer Geraden steht, die angenähert der Verlauf der Längsachse in dem Abschnitt des Steuerstabführungsrohres wiedergibt, in dem sich die Sonde an diesem abstützt.

Eine eindeutige Beziehung zwischen der Lage der zumindest einen Referenzachse und der Orientierung der Längsachse des Steuerstabführungsrohres kann auf einfache Weise erzielt werden, wenn am Umfang der Sonde senkrecht zu ihrer Mittelachse radial ausfahrbare und an die Innenwand des Steuerstabführungsrohres anstellbare Stützmittel angeordnet sind, die die Sonde im Steuerstabführungsrohr derart ausrichten, dass deren Mittelachse im jeweiligen Abschnitt wenigstens annähernd parallel zur Längsachse des Steuerstabführungsrohres verläuft. Das Merkmal "parallel zur Längsachse" ist im Sinne der vorliegenden Anmeldung dahingehend zu verstehen, dass die Mittelachse parallel zu einer den tatsächlichen Verlauf der Längsachse in diesem Abschnitt angenäherten Geraden, beispielsweise eine Tangente an der Längsachse in diesem Abschnitt, ausgerichtet ist.

Wenn als Messeinrichtung zum Bestimmen der Orientierung der zumindest einen Referenzachse in einem Abschnitt relativ zur Orientierung der Referenzachse in einem anderen Abschnitt ein Neigungsmesser zum Bestimmen der Neigung der Mittelachse der Sonde gegen die Vertikale vorgesehen ist, kann die Verformung des Steuerstabführungsrohres mit einer einteiligen starren Sonde erfasst werden.

In einer weiteren Ausgestaltung der Erfindung umfasst die Messeinrichtung zum Bestimmen der Neigung ein Pendel, das frei schwingend innerhalb der Sonde gelagert ist, und dessen Auslenkung relativ zur Mittelachse gemessen wird. Dies ermöglicht mit geringem konstruktivem Aufwand eine einfache und präzise unmittelbare Messung der Neigung der Mittelachse der Sonde gegen die Vertikale.

In einer weiteren Ausgestaltung der Erfindung umfasst die Messeinrichtung zum Bestimmen der Auslenkung eine Abstandsmesseinrichtung zum Messen eines Abstandes zwischen einem Pendelkörper des Pendels und zumindest einem ortsfest in der Sonde angeordneten Bezugspunkt. Auf diese Weise kann mit handelsüblichen Abstandssensoren eine hohe Messgenauigkeit erzielt werden.

Um die lokale Verformung des Brennelementes, d.h. die lokale Richtung der an der Längsachse des Steuerstabführungsrohres anliegenden Tangente im Raum zu ermitteln, d.h. die Auslenkung und Orientierung der Pendelebene bzw. die Auslenkung des Pendelkörpers in zwei Richtungen zu erfassen, sind in der Messeinrichtung zumindest zwei Abstandsmesseinrichtung vorgesehen, mit der der Abstand des Pendelkörpers zu zwei voneinander beabstandeten, in der Sonde angeordneten Bezugspunkten gemessen werden kann.

In einer besonders bevorzugten Ausgestaltung der Erfindung ist als Abstandsmesseinrichtung ein berührungslos arbeitender Wirbelstrom-Wegaufnehmer vorgesehen, der insbesondere ortsfest in der Sonde angeordnet ist.

In einer alternativen Ausgestaltung der Erfindung umfasst die Messeinrichtung zum Bestimmen der Neigung zumindest eine Libelle, in deren Libellenkapsel sich als Libellenauge eine Gasblase oder ein beweglich innerhalb der Libellenkapsel gelagerte Schwimmkörper befindet, dessen spezifisches Gewicht kleiner ist als das spezifische Gewicht der in der Libellenkapsel befindlichen Libellenflüssigkeit, wobei im Bereich der Libelle zumindest eine Spule angeordnet ist, deren Induktivität von der Lage des Libellenauges abhängt. Eine derartige Anordnung ermöglicht einen besonders kompakten Aufbau der Einrichtung.

In einer vorteilhaften Ausgestaltung ist als Libelle eine Röhrenlibelle vorgesehen, um die zwei elektrische Spulen mi einander zugewandten Stirnseiten gewickelt sind.

Eine hohe Messempfindlichkeit wird erzielt, wenn die Spulen als Halbbrücke einer Wheatstone-Brücke geschaltet sind.

Alternativ hierzu können die Spulen auch als Sekundärspulen eines Differenzialtransformators ausgebildet sein.

In einer besonders bevorzugten Ausgestaltung der Erfindung ist die Sonde aus wenigstens zwei in Längsrichtung hintereinander angeordneten Teilsonden aufgebaut, die schwenkbar um zwei zueinander und zu den Mittelachsen der Teilsonden senkrechte Achsen aneinander gekoppelt sind, wobei jede der Teilsonden eine Referenzachse aufweist und sich die Teilsonden in voneinander beabstandeten Abschnitten des Steuerstabführungsrohres an dessen Innenwand derart abstützen, dass die Orientierung der Referenzachsen eindeutig von der Orientierung der Längsachse des Steuerstabführungsrohres in den jeweiligen Abschnitten des Steuerstabführungsrohres abhängt, wobei in der Sonde eine Messeinrichtung zum Bestimmen der Orientierung der Referenzachsen relativ zueinander angeordnet ist.

Bei einer solchen zumindest zweiteiligen Einrichtung wird ausgenutzt, dass sich die beiden Teilsonden in voneinander beabstandeten Abschnitten des Steuerstabführungsrohres befinden, so dass eine Krümmung des Steuerstabführungsrohres mit einer Messeinrichtung erfasst werden kann, die in der Lage ist, die relative Orientierung der jeweiligen Referenzachsen zu messen. Dies kann beispielsweise eine optische Messeinrichtung sein, bei der in einer Teilsonde ein Lichtstrahl erzeugt wird, der sich entlang einer Achse - die Referenzachse, beispielsweise die Mittelachse dieser Teilsonde- zur anderen Teilsonde hin ausbreitet, und in der anderen Teilsonde auf einen Empfänger auftrifft, mit dem die Position des auftreffenden Lichtstrahls erfasst werden kann, anhand derer bei gegebenen Abstand zwischen Empfänger und Lichtquelle der Winkel, unter dem sich der Lichtstrahl relativ zu einer Referenzachse dieser anderen Teilsonde, beispielsweise ebenfalls deren senkrecht zur Empfängerebene verlaufende Mittelachse, ausbreitet.

Auch in dieser zwei- oder mehrteiligen Anordnung sind am Umfang jeder Teilsonde senkrecht zur Mittelachse ausfahrbare und gegen die Innenwand des Steuerstabführungsrohres (2) anstellbare Stützmittel angeordnet, die die Teilsonde im Steuerstabführungsrohr derart ausrichten, dass deren Mittelachse im Bereiche der Stützmittel wenigstens annähernd parallel zur Längsachse des Steuerstabführungsrohres in dem jeweiligen Abschnitt verläuft.

Eine besonders leichtgängige gegenseitige Schwenkbarkeit der Teilsonden wird erreicht, wenn diese über ein Kardangelenk aneinander gekoppelt sind.

Wenn als Messeinrichtung ein mit zumindest einem Dehnungssensor versehenes Biegeelement vorgesehen ist, das zwischen den Teilsonden eingespannt ist, ist mit geringem konstruktiven Aufwand eine auch unter schwierigen Einsatzbedingungen besonders geringe Störanfälligkeit gewährleistet.

Eine hohe Messempfindlichkeit wird dabei erzielt, wenn das Biegeelement einen im Querschnitt quadratischen Biegebalken umfasst, der einseitig in einer der Teilsonden fixiert ist und dessen freies Ende kraftschlüssig mit einer Betätigungsstange verbunden ist, deren freies Ende eine in der anderen Teilsonde gleitend gelagerte Kugel umfasst.

Um die Verformungen in zwei zueinander und zur Längsachse des Steuerstabführungsrohrs senkrechte Richtungen erfassen zu können, sind in einer besonders vorteilhaften Ausgestaltung zumindest zwei zueinander senkrechte Flachseiten des Biegebalkens mit einem Dehnungssensor, vorzugsweise ein Dehnungsmessstreifen versehen.

Wenn insbesondere jede Flachseite des Biegebalkens mit einem Dehnungsmessstreifen versehen ist und die einander gegenüberliegenden Dehnungsmessstreifen als Halbbrücke einer Wheatstone-Brücke geschaltet sind, ist die Messempfindlichkeit erhöht.

Der Vorschub der Sonde innerhalb des Steuerstabführungsrohres wird erleichtert, wenn als Stützmittel Führungsrollen oder Kugeln vorgesehen sind, die bei axialem Vorschub am Innenumfang des Steuerstabführungsrohres abrollen.

Zur weiteren Erläuterung der Erfindung wird auf die Ausführungsbeispiele der Zeichnung verwiesen. Es zeigen:
- Fig. 1: eine in ein Steuerstabführungsrohr eingeführte Einrichtung gemäß der Erfindung in einer schematischen Seitenansicht,
- Fig. 2: die Einrichtung in einem vereinfachten Querschnitt senkrecht zu ihrer Mittenlängsachse,
- Fig. 3: eine alternative Ausführungsform gemäß der vorliegenden Erfindung, bei der als Messeinrichtung eine mit Messspulen versehene Libelle vorgesehen ist, ebenfalls in einer schematischen Prinzipdarstellung,
- Fig. 4: eine vereinfachte Darstellung der Beschaltung der in der Ausführungsform gemäß Fig. 3 verwendeten Messspulen,
- Fig. 5: eine vorteilhafte Ausgestaltung der für eine Sonde gemäß der Erfindung verwendeten Stützmittel zum Zentrieren der Sonde innerhalb des Steuerstabführungsrohres,
- Fig. 6: ein Prinzipbild mit einer zweiteilig gestalteten Sonde,
- Fig. 7: eine aus zwei Teilsonden aufgebaute Sonde gemäß der Erfindung in einem schematischen Längsschnitt,
- Fig. 8: einen Aufbau einer Vorrichtung mit einer Mehrzahl von Sonden zum gleichzeitigen Vermessen der Verformung einer entsprechenden Anzahl von Steuerstabführungsrohren eines im Kern eingebauten Brennelementes.

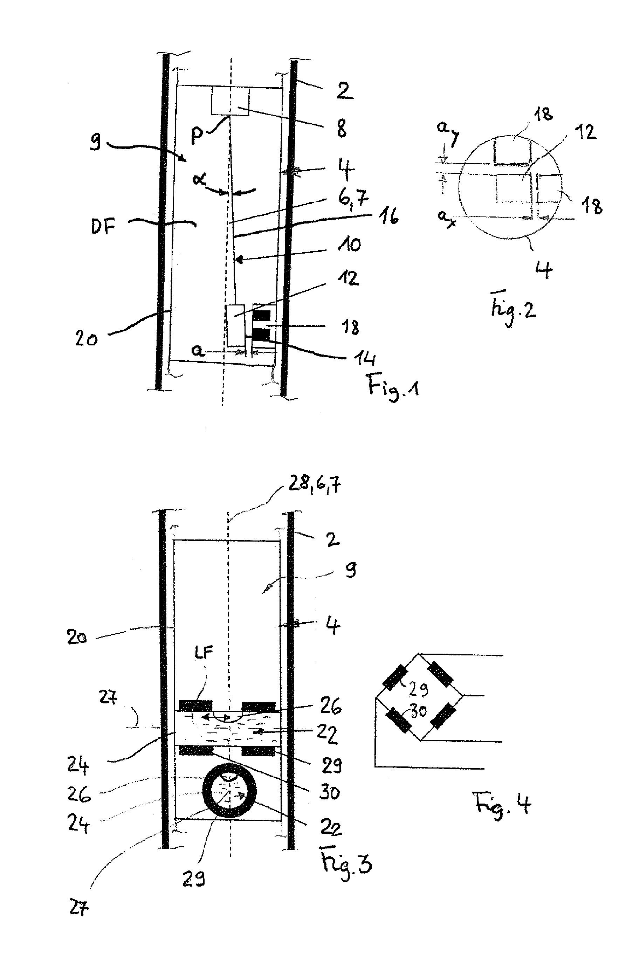

Gemäß Fig. 1 umfasst eine Einrichtung gemäß der Erfindung eine in das Innere eines Steuerstabführungsrohres 2 einführbare Sonde 4. Die Sonde 4 ist mit Hilfe von in der Figur nicht dargestellten Stützmitteln zentrisch im Steuerstabführungsrohr 2 angeordnet, so dass ihre als eine Referenzachse dienende Mittelachse 6 in einem durch die Stützmittel definierten Abschnitt des Steuerstabführungsrohres 2 mit dessen Längsachse 7 zumindest annähernd zusammenfällt bzw. zumindest annähernd parallel zu einer die Längsachse 7 in diesem Abschnitt berührenden Tangente ist. Dabei sind die axialen Abmessungen der Sonde 4 so klein, dass eine durch eine in der Praxis auftretende Verformung des Steuerstabführungsrohres im Bereich der Sonde 4 vorliegende Krümmung seiner Längsachse praktisch vernachlässigbar ist und aus Gründen der Übersichtlichkeit nicht zeichnerisch dargestellt ist.

In der Sonde 4 ist als Messeinrichtung 9 ein Inklinometer oder Neigungsmesser angeordnet, mit dem es möglich ist, eine Neigung der Mittelachse 6 gegen die Vertikale zu bestimmen. Im dargestellten Beispiel umfasst die Messeinrichtung 9 ein in einer Pendelaufhängung 8 aufgehängtes freischwingendes, d.h. in allen Vertikalebenen mit beliebigen Azimutwinkeln schwingfähiges Pendel 10, dessen Lage die Richtung der Vertikalen anzeigt. Die Pendelaufhängung 8 ist mittig in der Sonde 4 angeordnet, so dass der Aufhängepunkt P des Pendels 10 auf der Mittelachse 6 liegt.

In der Figur ist zu erkennen, dass das Pendel 10 um den Neigungswinkel α geneigt zur Mittelachse 6 ausgerichtet ist, und dass somit am Messort, d.h. in dem Abschnitt des Steuerstabführungsrohres 2, in dem sich die Sonde 4 an der Innenwand des Steuerstabführungsrohres 2 abstützt, die Längsachse des Steuerstabführungsrohres 2 schräg zur Vertikalen orientiert ist.

Am freien Ende des Pendels 10 befindet sich ein Pendelkörper 12 mit zumindest einer ebenen Flachseite 14, deren Normale senkrecht zum Pendelarm 16 orientiert ist. Gegenüber dieser Flachseite 14 ist eine Abstandsmesseinrichtung 18 ortsfest innerhalb der Sonde 4 angeordnet, mit der der Abstand a zwischen dem Pendelkörper 12, d.h. zwischen der Flachseite 14 des Pendelkörpers 12 zu einem ortsfest in der Sonde 4 angeordneten Bezugspunkt gemessen wird.

Zur deutlicheren Veranschaulichung ist in der Figur der Neigungswinkel α übertrieben eingezeichnet, so dass die plane Flachseite 14 ebenfalls erkennbar geneigt zur planen Flachseite der Abstandsmesseinrichtung verläuft. In der Praxis ist jedoch dieser Neigungswinkel α so klein, dass diese Neigung innerhalb der geforderten Messgenauigkeit vernachlässigbar ist.

Als Abstandsmesseinrichtung 18 ist ein berührungslos arbeitender Wirbelstrom-Wegaufnehmer vorgesehen. Mit diesem Wirbelstrom-Wegaufnehmer wird der Abstand a zur Flachseite 14 eines elektrisch leitfähigen Pendelkörpers 12 berührungslos erfasst. Der Neigungswinkel α und der Abstand a sind für kleine Neigungswinkel α durch eine lineare Beziehung miteinander verknüpft. Auf diese Weise kann der Neigungswinkel α der an der Längsachse des Steuerstabführungsrohres 2 anliegenden Tangente in verschiedenen axialen Positionen und damit der Kurvenverlauf der Längsachse des Steuerstabführungsrohres 2 gemessen werden.

Pendel 10 und Abstandsmesseinrichtung 18 sind innerhalb eines gekapselten Gehäuses 20 angeordnet, das zur Dämpfung des Pendels 10 vorzugweise mit einem Fluid DF gefüllt ist.

Um die Lage des Pendelarms 16 im Raum zu erfassen, sind gemäß Fig. 2 zwei Abstandsmesseinrichtungen 18 in zueinander um 90° versetzten Positionen innerhalb der Sonde 4 angeordnet. Mit diesen Abstandsmesseinrichtungen 18 werden zwei Abstände aₓ und ay und somit die Auslenkung des Pendelkörpers 12 in zwei zueinander orthogonalen Richtungen gemessen, so dass die räumliche Lage der Pendelachse, d.h. der Azimutwinkel der Pendelebene und die Auslenkung des Pendels in dieser Pendelebene erfasst werden können. Auf diese Weise kann auch eine Torsion des Steuerstabführungsrohres 2 ermittelt werden, ohne dass es hierzu einer erneuten Messung mit um 90° verdrehter Sonde 4 bedarf.

Die Messung der Orientierung der Mittelachse 6 der Sonde 2 wird abschnittsweise in unterschiedlichen axialen Positionen oder axialen Abschnitten innerhalb des Steuerstabführungsrohres 2 durchgeführt. Anhand der in unterschiedlichen axialen Abschnitten erhaltenen Messwerte kann der Verlauf der Längsachse 7 des Steuerstabführungsrohres 2, d.h. dessen Verformung ermittelt werden. Eine Vermessung der Verformung ist auch dann möglich, wenn das Steuerstabführungsrohr 2 nicht exakt vertikal ausgerichtet ist. Bei einem beispielsweise nicht verformten, schräg zur Vertikalen ausgerichteten Steuerstabführungsrohr 2 würden beispielsweise die in jeder Messposition gleichen Messwerte für den Neigungswinkel α das Fehlen einer Krümmung anzeigen.

In der alternativen Ausgestaltung gemäß Fig. 3 umfasst die Messeinrichtung 9 zum Bestimmen der Neigung der Mittelachse 6 bzw. der Längsachse 7 gegen die Vertikale zwei in einem Messaufnehmergehäuse 20 angeordnete Libellen 22. Im Beispiel handelt es sich hierbei um Röhrenlibellen mit einer im Wesentlichen (in der schematisch vereinfachten Darstellung ist die notwendige Krümmung nicht berücksichtigt) zylindrischen Libellenkapseln 24, in deren Libellenflüssigkeit LF als Libellenauge 26, im Beispiel eine Gasblase, schwimmt, deren magnetische Eigenschaften von den magnetischen Eigenschaften der Libellenflüssigkeit LF abweicht. Um jede Libellenkapsel 24 sind symmetrisch zur senkrecht zu ihrer Zylinderachse 27 orientierten Mittenebene 28 zwei baugleiche Spulen 29, 30 gewickelt, die zueinander im Wesentlichen (bei Vernachlässigung der Krümmung der Libellenkapseln 24) koaxial sind, und deren Stirnflächen einander zugewandt sind. Im dargestellten Beispiel liegt die Mittenlängsachse 6 der Sonde 4 in der Mittenebene 28.

Die Lage des sich innerhalb der Libellenkapsel 24 jeweils befindlichen Libellenauges 26 hängt von der Neigung der Mittenachse 6 am Messort, d.h. am Ort der Libellenkapsel 24 ab. Wenn die Orientierung dieser Mittenachse 6 von der Vertikalen abweicht, befindet sich das Libellenauge 26 nicht mehr mittig zwischen den Spulen 29 und 30. Dies führt zu einer Änderung der Induktivitäten der Spulen 29 und 30. Diese Induktivitätsänderung kann auf einfache Weise gemessen werden, wenn die Spulen 29, 30 als Halbbrücke einer Wheatstone-Brücke geschaltet sind, wie dies in Fig. 4 veranschaulicht ist. Dabei ist es zwar von Vorteil, aber nicht zwingend erforderlich, dass die Spulen 29, 30 bei mittiger Stellung des Libellenauges 26 dieselbe Induktivität haben.

Alternativ zu der dargestellten Ausführungsform ist es auch möglich, anstelle von zwei Röhrenlibellen eine Dosenlibelle einzusetzen, auf der beispielsweise vier Flachspulen angeordnet sind.

Anstelle der in der Fig. 3 dargestellten Ausführungsform mit zwei Spulen 29, 30, die als Halbbrücke einer Wheatstone-Brücke geschaltet sind, können die Spulen 29, 30 auch als Sekundärspule eines Differentialtransformators geschaltet sein, so dass die Differenz der in beiden Sekundärspulen gemessenen Spannungen unmittelbar ein Maß für die Lage des Libellenauges 26 darstellt.

Als Libellenauge 26 kann alternativ zu einer Gasblase auch ein innerhalb der Libellenkapsel 24 gelagerter Schwimmkörper angeordnet sein, dessen spezifisches Gewicht kleiner ist als das spezifische Gewicht der in der Libellenkapsel 24 befindlichen Libellenflüssigkeit 25. Bei einem solchen Schwimmkörper können dann ferritische Werkstoffe zum Einsatz gelangen, mit denen die Messempfindlichkeit erhöht wird.

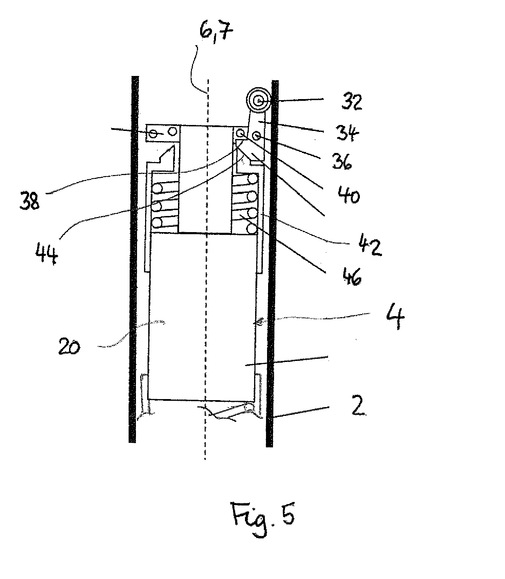

In der Darstellung gemäß Fig. 5 ist zu erkennen, dass die Sonde 4 an ihren Stirnseiten, d.h. zu beiden Seiten des Messaufnehmergehäuses 20 gegen die Innenwand des Steuerstabführungsrohres 2 anstellbare Stützmittel 32 aufweist, wobei aus Gründen der Übersichtlichkeit der Darstellung nur ein Stützmittel 32 an einer der Stirnseiten der Sonde 4 dargestellt ist. Im Beispiel handelt es sich bei dem Stützmittel 32 um eine Führungsrolle, die über einen Kniehebel 34 um eine senkrecht zur Mittenlängsachse 6 der Sonde 4 verlaufende Schwenkachse 36 gelagert ist. Der Kniehebel 34 ist mit einer Schulter 38 versehen, die mit Hilfe eines an der Aufhängung des Kniehebels 34 angeordneten Anschlages 40 den Schwenkweg des Stützmittels 32 begrenzt. An der Sonde 4 ist ein in Richtung ihrer Mittenlängsachse 6 beweglich gelagerter hohlzylindrischer Schieber 42 angeordnet, der eine konusförmige Stirnfläche 44 aufweist, die mit einer ebenfalls schräg gestalteten Fläche des Kipphebels 34 zusammenwirkt. Die Betätigung des Schiebers 42 folgt mittels einer sich am Messaufnehmergehäuse 20 abstützenden Druckfeder 46, so dass die Stirnfläche 44 gegen die ihr zugewandte Fläche des Kipphebels 34 wirkt und das Stützmittel 32 nach außen an die Innenwand des Steuerstabführungsrohres 2 andrückt. In dem durch die Stützmittel 32 festgelegten Abschnitt wird die Mittelachse der Sonde 4 parallel zur Längsachse 7 des Steuerstabführungsrohres 2 ausgerichtet.

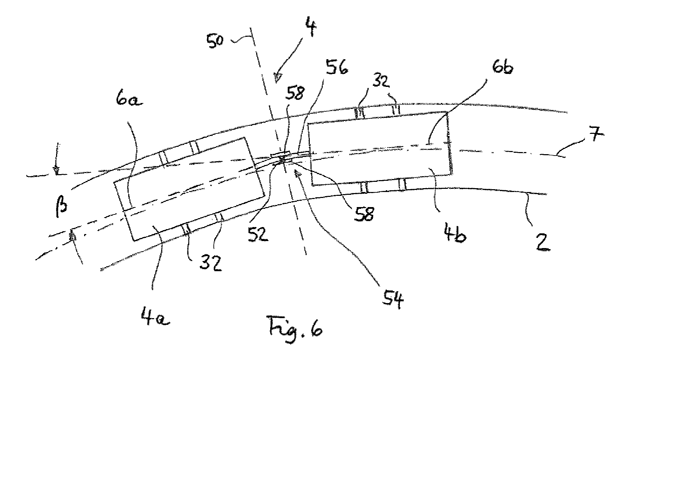

Gemäß dem in Fig. 6 dargestellten Ausführungsbeispiel umfasst die Sonde 4 zwei Teilsonden 4a,4b, die in Längsrichtung hintereinander angeordnet sind und schwenkbar um zwei zueinander und zu den Mittelachsen 6a,6b der Teilsonden 4a,4b senkrechte Achsen 50,52 aneinander gekoppelt sind. Im dargestellten Beispiel weist das Steuerstabführungsrohr 2 eine übertrieben eingezeichnete Krümmung in der Zeichenebene auf. Jede der Teilsonden 4a,4b ist mit Stützmitteln 32 versehen, mit denen die Teilsonden 4a,4b in den von den Stützmitteln 32 festgelegten Abschnitten des Steuerstabführungsrohres 2 zentriert ausgerichtet werden, so dass ihre Mittelachsen 6a,6b in diesem Abschnitt annähernd parallel zur Längsachse 7 bzw. parallel zu einer an der Längsachse 7 des Steuerstabführungsrohres im Bereich der Stützmittel 32 anliegenden Tangente verlaufen. Die Stützmittel 32 sind hierzu jeweils in zwei voneinander in Axialrichtung der Teilsonden 4a,4b beabstandeten Ebenen angeordnet. Im Ausführungsbeispiel dienen die Mittelachsen 6a,b zugleich als Referenzachsen der jeweiligen Teilsonden, die dementsprechend eindeutig von der Orientierung der Längsachse 7 des Steuerstabführungsrohres 2 in den Abschnitten des Steuerstabführungsrohres 2 abhängen, die sich jeweils zwischen den Stützmitteln 32 der Teilsonden 4a,4b befinden.

In der Sonde 4 ist eine Messeinrichtung 54 angeordnet, mit der die Orientierung der Referenzachsen bzw. Mittelachsen 6a,6b relativ zueinander, d.h. im vereinfacht dargestellten Beispiel mit einer lediglich in einer Ebene (Zeichenebene) gekrümmten Längsachse 7 deren Neigungswinkel β, gemessen werden kann. Im dargestellten vereinfachten Ausführungsbeispiel umfasst die Messeinrichtung 54 ein zwischen den Teilsonden 6a,6b eingespanntes Biegeelement 56, dessen einander gegenüberliegende Flachseiten jeweils mit einem Dehnungssensor 58, beispielsweise ein Dehnungsmessstreifen, versehen sind. Mit diesen Dehnungssensoren 58 wird die Durchbiegung des Biegeelements 56 erfasst, die ein Maß für den Neigungswinkel β darstellt. Wenn es sich bei den Dehnungssensoren 58 um einen sogenannten Dehnungsmessstreifen handelt, deren Widerstand sich in Abhängigkeit von der Dehnung ändert, sind die einander gegenüberliegenden Dehnungsmessstreifen vorzugsweise als Halbbrücke einer Wheatstone-Brücke geschaltet.

Während in den Ausführungsbeispielen gemäß Fig. 1 bis 5 die Messung mit einer einteiligen Sonde 4 erfolgt, in dem durch Verschieben der Sonde 2 in voneinander beabstandeten Abschnitten des Steuerstabführungsrohres 2 ein die Orientierung der Längsachse 7 in dem jeweiligen Abschnitt entsprechendes Messsignal erzeugt wird, wird im Ausführungsbeispiel gemäß Fig. 6 mit Hilfe der beiden Teilsonden 4a,4b die Lage der Längsachse 7 in zwei voneinander beabstandeten Abschnitten des Steuerstabführungsrohres 2 relativ zueinander, d.h. unmittelbar ein der Krümmung entsprechender Messwert bestimmt.

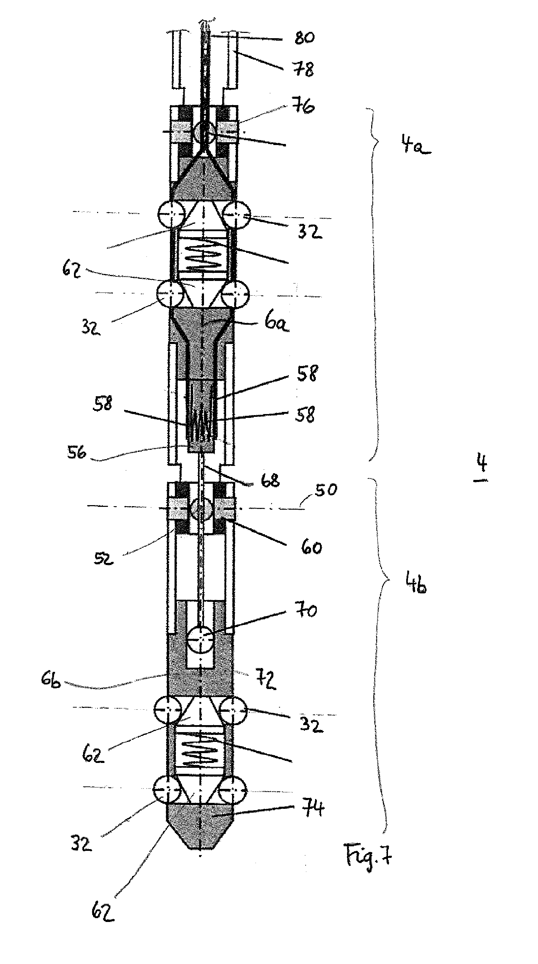

Gemäß Fig. 7 sind die beiden Teilsonden 4a,4b über ein Kardangelenk 60 um die beiden zueinander senkrechten Achsen 50,52 aneinander gekoppelt. Jede der beiden Teilsonden umfasst in zwei voneinander beabstandeten und senkrecht zur jeweiligen Mittelachse 6a bzw. 6b orientierten Ebenen eine Mehrzahl von am Umfang jeweils verteilten Stützmittel 32. Bei diesen Stützmitteln 32 handelt es sich im Ausführungsbeispiel jeweils um vier Kugeln, die jeweils über einen axial verschiebbaren Konus 62 radial nach außen gedrückt werden und dadurch federnd an die Innenwand des Steuerstabführungsrohres angestellt werden.

In der Teilsonde 4a ist als Biegeelement 56 ein quaderförmiger im Querschnitt quadratischer Biegebalken eingespannt, der auf jeder seiner Flachseiten mit einem Dehnungssensor 58, beispielsweise ein Dehnungsmessstreifen, versehen ist. Die der benachbarten Teilsonde 4b zugewandte Stirnseite des Biegebalkens ist starr mit einer Betätigungsstange 68 verbunden, die an ihrem vom Biegebalken abgewandten freien Ende eine Kugel 70 aufweist, die gleitend in einer in der Teilsonde 4b angeordneten Buchse 72 gelagert ist. Ein konisch geformtes Kopfteil 74 der Teilsonde 4b erleichtert das Einführen der Sonde 4 in ein Steuerstabführungsrohr.

An ihrem dem Kopfteil 74 abgewandten Ende ist die Teilsonde 4a über ein Kardangelenk 76 an ein Handhabungsrohr angelenkt. Dieses Handhabungsrohr 78 dient zum Vorschieben der Sonde 4 innerhalb des Steuerstabführungsrohres. In der Fig. 7 sind außerdem noch die zu den Dehnungssensoren 58 führenden Messkabel 80 schematisch dargestellt.

Befinden sich die Teilsonden 4a,4b in einem gekrümmten Bereich eines Steuerstabführungsrohres, so wird mit Hilfe der Stützmittel 32 jede der Teilsonden 4a,4b im Bereich dieser Stützmittel 32 etwa annähernd tangential zu der Längsachse des Steuerstabführungsrohres ausgerichtet. Aufgrund der Krümmung der Längsachse verlaufen die Mittelachsen 6a,6b dann unter einem von Null verschiedenen Winkel β. Dadurch wird von der in der Buchse 72 gelagerten Betätigungsstange 68 ein Biegemoment auf das Biegeelement 56 ausgeübt. Durch die jeweils einander gegenüberliegenden Dehnungssensoren 58 kann nun die Biegung des als Biegebalken mit quadratischem Querschnitt ausgestalteten Biegeelements 56 in zwei zueinander orthogonalen Ebenen erfasst werden. Die als Dehnungssensoren 58 verwendeten jeweils einander gegenüberliegenden Dehnungsmessstreifen sind analog zu dem in Fig. 4 dargestellten Beispiel vorzugsweise als Halbbrücke einer Wheatstone-Brücke geschaltet.

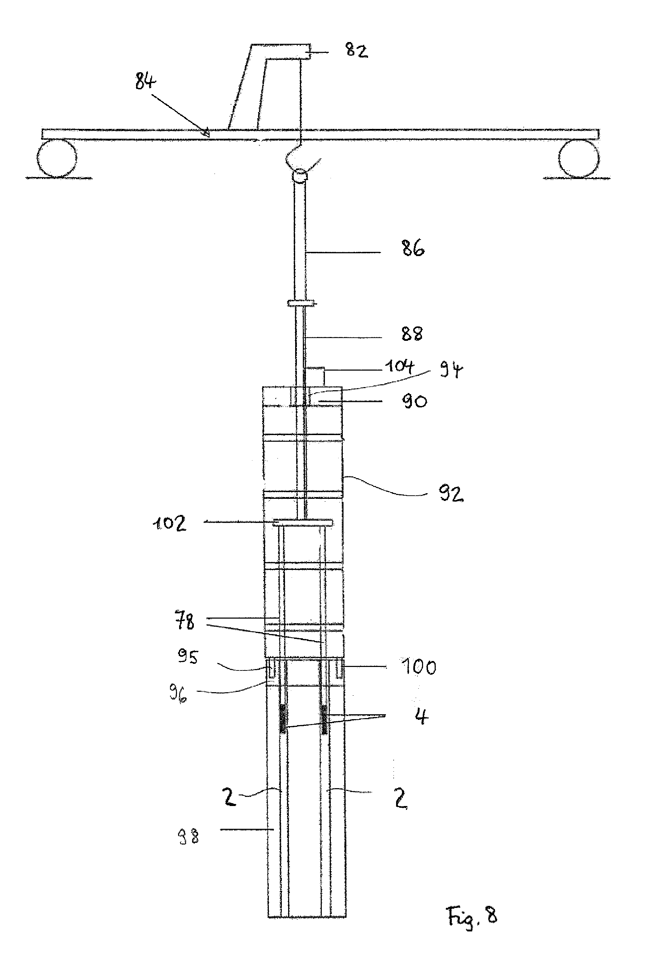

Gemäß Fig. 8 umfasst die Gesamtvorrichtung eine am Kran 82 einer Brennelementlademaschine 84 aufgehängte Haltestange 86, die in ihrem vom Kran 82 abgewandten Bereich mit einer Zahnstange 88 versehen ist. Die Zahnstange 88 ist in einer am Kopfteil 90 eines Führungsgerüstes 92 angeordneten Stangenführung 94 geführt. Das Führungsgerüst 92 ist mit Hilfe von Positionierstiften 95 in am Kopf 96 eines Brennelementes 98 angeordneten Bohrungen 100 zentrisch zum Brennelement 98 ausgerichtet. Am vom Kran 82 abgewandten Ende der Zahnstange 88 ist eine Spinne 102 angeordnet, an der eine Mehrzahl von Handhabungsrohren 78 fixiert sind, die an ihrem freien Ende jeweils mit einer Sonde 4 gemäß der Erfindung versehen sind. Mit Hilfe eines an der Zahnstange eingreifenden Weggebers 104 wird ein die aktuelle Position der Sonden 4 innerhalb der Steuerstabführungsrohre 2 entsprechendes Wegsignal erfasst.

Im schematisch dargestellten Ausführungsbeispiel sind zwei Sonden 4 veranschaulicht. In der Praxis hat es sich als besonders günstig herausgestellt, die Vorrichtung mit vier Sonden 4 zu versehen, die in vier an Eckpunkten des Brennelementes 98 angeordnete Steuerstabführungsrohre 2 eingeführt werden.

## Patentansprüche

1. Einrichtung zum Messen der Verformung eines Brennelementes eines Druckwasserreaktors, das eine Mehrzahl von Steuerstabführungsrohren (2) umfasst, mit einer in das Innere eines Steuerstabführungsrohres (2) einführbaren und in Richtung der Längsachse des Steuerstabführungsrohres (2) verfahrbaren Sonde (4), die zumindest eine Referenzachse aufweist, und die sich in zumindest einem Abschnitt des Steuerstabführungsrohres (2) an dessen Innenwand derart abstützt, dass die Orientierung der zumindest einen Referenzachse eindeutig von der Orientierung der Längsachse (7) des Steuerstabführungsrohres (2) in diesem Abschnitt abhängt, und mit einer in der Sonde (4) angeordneten Messeinrichtung (9,54) zum Bestimmen der Orientierung der zumindest einen Referenzachse in diesem Abschnitt des Steuerstabführungsrohres (2) relativ zur Orientierung dieser oder einer weiteren Referenzachse der Sonde (4) in einem anderen Abschnitt, **dadurch gekennzeichnet dass**
als Messeinrichtung (9) ein Neigungsmesser zum Bestimmen der Neigung der Mittelachse (6) der Sonde (4) gegen die Vertikale vorgesehen ist.

2. Einrichtung nach Anspruch 1, bei der am Umfang der Sonde (4) senkrecht zu ihrer Mittelachse (6) radial ausfahrbare und an die Innenwand des Steuerstabführungsrohres (2) anstellbare Stützmittel (32) angeordnet sind, die die Sonde (4) im Steuerstabführungsrohr (2) derart ausrichten, dass deren Mittelachse (6) im jeweiligen Abschnitt wenigstens annähernd parallel zur Längsachse (7) des Steuerstabführungsrohres (2) verläuft.

3. Einrichtung nach Anspruch 1 oder 2, bei der die Messeinrichtung (9) zum Bestimmen der Neigung ein Pendel (10) umfasst, das frei schwingend innerhalb der Sonde gelagert ist, und dessen Auslenkung relativ zur Mittelachse (6) gemessen wird.

4. Einrichtung nach Anspruch 3, bei der die Messeinrichtung (9) zum Bestimmen der Auslenkung eine Abstandsmesseinrichtung (18) zum Messen eines Abstandes (a) zwischen einem Pendelkörper (12) des Pendels (10) und zumindest einem ortsfest in der Sonde (4) angeordneten Bezugspunkt umfasst.

5. Einrichtung nach Anspruch 4, bei der zum Erfassen der Auslenkung des Pendelkörpers (12) und der Orientierung der Pendelebene zumindest zwei Abstandsmesseinrichtungen (18) zum Messen des Abstandes (aₓ,a_{y}) des Pendelkörpers (12) zu zwei voneinander beabstandet in der Sonde (4) angeordneten Bezugspunkten vorgesehen sind.

6. Einrichtung nach Anspruch 4 oder 5, bei der als Abstandsmesseinrichtung (18) ein berührungslos arbeitender Wirbelstrom-Wegaufnehmer vorgesehen ist.

7. Einrichtung nach Anspruch 6, bei der der Wirbelstrom-Wegaufnehmer ortsfest in der Sonde (4) angeordnet ist.

8. Einrichtung nach Anspruch 1, bei der die Messeinrichtung (9) zum Bestimmen der Neigung zumindest eine Libelle (22) umfasst, in deren Libellenkapsel (24) sich als Libellenauge (26) eine Gasblase oder ein beweglich innerhalb der Libellenkapsel (24) gelagerter Schwimmkörper befindet, dessen spezifisches Gewicht kleiner ist als das spezifische Gewicht der in der Libellenkapsel (24) befindlichen Libellenflüssigkeit (LF), wobei im Bereich der Libelle (22) zumindest eine Spule (29,30) angeordnet ist, deren Induktivität von der Lage des Libellenauges (26) abhängt.

9. Einrichtung nach Anspruch 8, bei dem als Libelle (22) eine Röhrenlibelle vorgesehen ist, um die zwei elektrische Spulen (29,30) mit einander zugewandten Stirnseiten gewickelt sind.

10. Einrichtung nach Anspruch 9, bei der die Spulen (29,30) als Halbbrücke einer Wheatstone-Brücke geschaltet sind.

11. Einrichtung nach Anspruch 9, bei der die Spulen (29,30) jeweils eine Sekundärspule eines Differentialtransformators bilden.

12. Einrichtung nach Anspruch 1, bei der die Sonde (4) aus wenigstens zwei in Längsrichtung hintereinander angeordneten Teilsonden (4a, 4b) aufgebaut ist, die schwenkbar um zwei zueinander und zu den Mittelachsen (6a, 6b) der Teilsonden (4a, 4b) senkrechte Achsen (50,52) aneinander gekoppelt sind, wobei jede der Teilsonden (4a,4b) eine Referenzachse aufweist und sich die Teilsonden (4a,4b) in voneinander beabstandeten Abschnitten des Steuerstabführungsrohres (2) an dessen Innenwand derart abstützen, dass die Orientierung der Referenzachsen eindeutig von der Orientierung der Längsachse (7) des Steuerstabführungsrohres (2) in den jeweiligen Abschnitten des Steuerstabführungsrohres (2) abhängt und mit einer in der Sonde (4) angeordneten Messeinrichtung (54) zum Bestimmen der Orientierung der Referenzachsen relativ zueinander.

13. Einrichtung nach Anspruch 12, bei der am Umfang jeder Teilsonde (4) senkrecht zur Mittenlängsachse (6) ausfahrbare und gegen die Innenwand des Steuerstabführungsrohres (2) anstellbare Stützmittel (32) angeordnet sind, die die Teilsonde (4) im Steuerstabführungsrohr (2) derart ausrichten, dass deren Mittenlängsachse (6) wenigstens annähernd parallel zur Längsachse (7) des Steuerstabführungsrohres (2) verläuft.

14. Einrichtung nach Anspruch 12 oder 13, bei der die Teilsonden (4a,4b) über ein Kardangelenk (76) aneinander gekoppelt sind.

15. Einrichtung nach Anspruch 12, 13 oder 14, bei der als Messeinrichtung (54) zwischen den Teilsonden (4a,4b) ein mit zumindest einem Dehnungssensor versehenes Biegeelement (56) eingespannt ist.

16. Einrichtung nach Anspruch 15, bei der das Biegeelement (56) einen im Querschnitt quadratischen Biegebalken umfasst, der einseitig in einer der Teilsonden (4a,4b) fixiert ist und dessen freies Ende kraftschlüssig mit einer Betätigungsstange (68) verbunden ist, deren freies Ende eine in der anderen Teilsonde gleitend gelagerte Kugel (70) umfasst.

17. Einrichtung nach Anspruch 16, bei der zumindest zwei zueinander senkrechte Flachseiten des Biegebalkens mit einem Dehnungssensor (58) versehen sind.

18. Einrichtung nach Anspruch 17, bei der als Dehnungssensoren (58) Dehnungsmessstreifen vorgesehen sind.

19. Einrichtung nach Anspruch 18, bei der jede Flachseite des Biegebalkens mit einem Dehnungsmessstreifen versehen ist und die einander gegenüberliegende Dehnungsmessstreifen als Halbbrücke einer Wheatstone-Brücke geschaltet sind.

## Claims

1. Device for measuring the deformation of a fuel element of a pressurised water reactor, which comprises a plurality of control rod guide tubes (2), having a probe (4) which can be inserted into the interior of a control rod guide tube (2) and can be moved in the direction of the longitudinal axis of the control rod guide tube (2), said probe having at least one reference axis and being supported in at least one section of the control rod guide tube (2) on its internal wall in such a way that the orientation of the at least one reference axis uniquely depends on the orientation of the longitudinal axis (7) of the control rod guide tube (2) in this section, and having a measuring device (9, 54) arranged in the probe (4) for determining the orientation of the at least one reference axis in this section of the control rod guide tube (2) relative to the orientation of this or another reference axis of the probe (4) in another section, **characterised in that**
an inclinometer is provided as the measuring device (9) for determining the inclination of the central axis (6) of the probe (4) against the vertical direction.

2. Device according to claim 1, wherein support means (32), which can be extended radially, perpendicular to its central axis (6), and applied to the internal wall of the control rod guide tube (2), are arranged on the periphery of the probe (4), said support means aligning the probe (4) in the control rod guide tube (2) in such a way that its central axis (6) runs at least approximately parallel to the longitudinal axis (7) of the control rod guide tube (2) in the respective section.

3. Device according to claim 1 or 2, wherein the measuring device (9) for determining the inclination comprises a pendulum (10), which is mounted in a manner which allows it to swing freely inside the probe, and whose deflection is measured relative to the central axis (6).

4. Device according to claim 3, wherein the measuring device (9) for determining the deflection comprises a distance measuring device (18) for measuring a distance (a) between a pendulum bob (12) of the pendulum (10) and at least one reference point which is arranged fixed in position in the probe (4).

5. Device according to claim 4, wherein at least two distance measuring devices (18) for measuring the distance (aₓ,a_{y}) between the pendulum bob (12) and two reference points, which are arranged spaced apart from each another in the probe (4), are provided to record the deflection of the pendulum bob (12) and the orientation of the pendulum plane.

6. Device according to claim 4 or 5, wherein an eddy current displacement transducer which operates in a contactless manner is provided as the distance measuring device (18).

7. Device according to claim 6, wherein the eddy current displacement transducer is arranged fixed in position in the probe (4).

8. Device according to claim 1, wherein the measuring device (9) for determining the inclination comprises at least one spirit level (22), in the spirit level capsule (24) of which a gas bubble or a float, which is mounted in a manner which allows it to move within the spirit level capsule (24), is located as a spirit level eye (26), the specific gravity of said float being smaller than the specific gravity of the spirit level fluid (LF) located in the spirit level capsule (24), wherein at least one coil (29, 30) is arranged in the region of the spirit level (22), the inductivity of said coil depending on the position of the spirit level eye (26).

9. Device according to claim 8, wherein a tubular spirit level is provided as the spirit level (22), around which two electric coils (29, 30) are wound with front sides which are facing each other.

10. Device according to claim 9, wherein the coils (29, 30) are operated as a half bridge of a Wheatstone bridge.

11. Device according to claim 9, wherein the coils (29, 30) each form a secondary coil of a differential transformer.

12. Device according to claim 1, wherein the probe (4) is constructed from at least two partial probes (4a, 4b) which are arranged in the longitudinal direction one behind the other, which are linked to each other in a manner which allows them to be pivoted around two axes (50, 52) which are perpendicular to each other and to the central axes (6a, 6b) of the partial probes (4a, 4b), wherein each of the partial probes (4a, 4b) has a reference axis and the partial probes (4a, 4b) are supported in sections of the control rod guide tube (2) which are spaced apart from each other on the internal wall of said control rod guide tube in such a way that the orientation of the reference axes uniquely depends on the orientation of the longitudinal axis (7) of the control rod guide tube (2) in the respective sections of the control rod guide tube (2), and having a measuring device (54) arranged in the probe (4) for determining the orientation of the reference axes relative to each other.

13. Device according to claim 12, wherein support means (32), which can be extended perpendicularly to the central axis (6) and can be applied to the internal wall of the control rod guide tube (2) are arranged on the periphery of each partial probe (4), said support means aligning the partial probe (4) in the control rod guide tube (2) in such a way that its central axis (6) runs at least approximately parallel to the longitudinal axis (7) of the control rod guide tube (2).

14. Device according to claim 12 or 13, wherein the partial probes (4a, 4b) are linked to each other via a universal link (76).

15. Device according to claim 12, 13 or 14, wherein a bending element (56) which is provided with at least one strain sensor is clamped between the partial probes (4a, 4b) as a measuring device (54).

16. Device according to claim 15, wherein the bending element (56) comprises a bending beam which is square in its cross section, said bending beam being fixed on one side in one of the partial probes (4a, 4b) and the unattached end of said bending beam being coupled non-positively with an operating bar (68), the unattached end of which comprises a ball (70) which is mounted in the other partial probe in a gliding manner.

17. Device according to claim 16, wherein at least two flat sides of the bending beam, which are perpendicular to one another, are provided with a strain sensor (58).

18. Device according to claim 17, wherein strain gauges are provided as strain sensors (58).

19. Device according to claim 18, wherein each flat side of the bending beam is provided with a strain gauge and the strain gauges which are located opposite one another are operated as a half-bridge of a Wheatstone bridge.

## Revendications

1. Dispositif pour mesurer la déformation d'un assemblage combustible d'un réacteur à eau sous pression qui comporte une pluralité de tubes guides (2) pour barres de commande, comprenant une sonde (4) pouvant être introduite à l'intérieur d'un tube guide (2) et se déplacer dans le sens de l'axe longitudinal du tube guide (2), sonde présentant au moins un axe de référence et s'appuyant, du moins sur un tronçon du tube guide (2), sur la paroi intérieure de celui-ci de telle sorte que l'orientation d'au moins un axe de référence dépend clairement de l'orientation de l'axe longitudinal (7) du tube guide (2) sur ce tronçon, et un dispositif de mesure (9, 54) disposé dans la sonde (4) pour déterminer l'orientation d'au moins un axe de référence sur ce tronçon du tube guide (2) par rapport à l'orientation de cet axe ou d'un autre axe de référence de la sonde (4) sur un autre tronçon, **caractérisé en ce qu'**
un inclinomètre sert de dispositif de mesure (9) pour déterminer l'inclinaison de l'axe médian (6) de la sonde (4) par rapport à la verticale.

2. Dispositif selon la revendication 1 dans lequel sont disposés, à la périphérie de la sonde (4), perpendiculairement à son axe médian (6), des moyens de soutien (32) déployables radialement et réglables sur la paroi intérieure du tube guide (2), moyens de soutien qui alignent la sonde (4) dans le tube guide (2) de telle sorte que l'axe médian (6) de celle-ci, sur le tronçon correspondant, est au moins approximativement parallèle à l'axe longitudinal (7) du tube guide (2).

3. Dispositif selon la revendication 1 ou la revendication 2, dans lequel le dispositif de mesure (9) destiné à déterminer l'inclinaison, comporte un pendule (10) positionné de manière à pouvoir osciller librement à l'intérieur de la sonde, et dont le débattement est mesuré par rapport à l'axe médian (6).

4. Dispositif selon la revendication 3 dans lequel le dispositif de mesure (9) destiné à déterminer le débattement, comporte un distancemètre (18), destiné à mesurer une distance (a) entre un corps pendulaire (12) du pendule (10) et au moins un point de référence fixe dans la sonde (4).

5. Dispositif selon la revendication 4, qui comporte au moins deux distancemètres (18) pour mesurer la distance (aₓ, a_{y}) du corps pendulaire (12) par rapport à deux points de référence disposés à une certaine distance l'un de l'autre dans la sonde (4) afin de détecter le débattement du corps pendulaire (12) et l'orientation du plan d'oscillation.

6. Dispositif selon la revendication 4 ou la revendication 5, dans lequel un capteur de déplacement à courant de Foucault sans contact sert de distancemètre (18).

7. Dispositif selon la revendication 6, dans lequel le capteur de déplacement à courant de Foucault est disposé fixement dans la sonde (4).

8. Dispositif selon la revendication 1, dans lequel le dispositif de mesure (9), destiné à déterminer l'inclinaison, comporte au moins une libelle (22) dans la capsule (24) de laquelle se trouve une bulle de gaz, servant d'oeilleton (26) ou un corps flottant mobile à l'intérieur de la capsule (24), dont le poids spécifique est inférieur au poids spécifique du liquide (LF) se trouvant à l'intérieur de la capsule (24), au moins une bobine (29, 30), dont l'inductance dépend de la position de l'oeilleton (26), étant disposée au niveau de la libelle (22).

9. Dispositif selon la revendication 8, dans lequel un niveau tubulaire à bulle d'air sert de libelle (22), niveau autour duquel deux bobines électriques (29, 30) sont enroulées avec leurs faces avant dirigées l'une vers l'autre.

10. Dispositif selon la revendication 9, dans lequel les bobines (29, 30) sont commutées en tant que demi-pont d'un pont de Wheatstone.

11. Dispositif selon la revendication 9, dans lequel les bobines (29, 30) forment chacune une bobine secondaire d'un transformateur différentiel.

12. Dispositif selon la revendication 1, dans lequel la sonde (4) est constituée d'au moins deux parties de sonde (4a, 4b), disposées l'une derrière l'autre dans le sens longitudinal, couplées l'une à l'autre de manière à pouvoir pivoter autour de deux axes (50, 52) perpendiculaires entre eux et par rapport aux axes médians (6a, 6b) des parties de sonde (4a, 4b), chacune des parties de sonde (4a, 4b) présentant un axe de référence et les parties de sonde (4a, 4b) se soutenant sur des tronçons, distants l'un de l'autre, du tube guide (2) sur la paroi intérieure de celui-ci de telle sorte que l'orientation des axes de référence dépend clairement de l'orientation de l'axe longitudinal (7) du tube guide (2) sur les tronçons correspondants du tube guide (2) et comprenant un dispositif de mesure (54), disposé dans la sonde (4) pour déterminer l'orientation des axes de référence l'un par rapport à l'autre.

13. Dispositif selon la revendication 12, dans lequel sont disposés, à la périphérie de chaque partie de sonde (4), des moyens de soutien (32) déployables perpendiculairement à l'axe médian (6) et réglables sur la paroi intérieure du tube guide (2), moyens de soutien qui alignent la partie de sonde (4) dans le tube guide (2) de telle sorte que l'axe médian de celle-ci (6) est au moins parallèle à l'axe longitudinal (7) du tube guide (2).

14. Dispositif selon la revendication 12 ou la revendication 13, dans lequel les parties de sonde (4a, 4b) sont couplées l'une à l'autre au moyen d'un cardan (76).

15. Dispositif selon la revendication 12, la revendication 13 ou la revendication 14, dans lequel un élément cintré (56), pourvu d'au moins un capteur d'allongement, est monté entre les parties de sonde (4a, 4b) et sert de dispositif de mesure (54).

16. Dispositif selon la revendication 15, dans lequel l'élément cintré (56) comporte une barre cintrée de section carrée, laquelle est fixée, d'un côté, dans l'une des parties de sonde (4a, 4b) et dont l'extrémité libre est reliée par adhérence à une barre d'actionnement (68) dont l'extrémité libre comporte une bille (70) pouvant glisser dans l'autre partie de sonde.

17. Dispositif selon la revendication 16, dans lequel au moins deux côtés plats de la barre cintrée, perpendiculaires entre eux, sont dotés d'un capteur d'allongement (58).

18. Dispositif selon la revendication 17, dans lequel des bandes de mesure de l'allongement servent de capteurs d'allongement (58).

19. Dispositif selon la revendication 18, dans lequel chaque côté plat de la barre cintrée est doté d'une bande de mesure de l'allongement et les bandes de mesure de l'allongement situées l'une en face de l'autre sont commutées en tant que demi-pont d'un pont de Wheatstone.
